# EUROPÄISCHE PATENTSCHRIFT

(11) **EP 0 770 784 B1**
(45) Veröffentlichungstag und Bekanntmachung des Hinweises auf die Patenterteilung: **12.07.2000**
(21) Anmeldenummer: 96117068.5
(22) Anmeldetag: 24.10.1996
(51) Int. Cl.: F16B 5/00

(54) **Klemmverbindung**
Clamping connection
Dispositif de raccordement à serrage

(30) Priorität: 26.10.1995 DE 19539804
(43) Veröffentlichungstag der Anmeldung: 02.05.1997
(73) Patentinhaber: Hoogovens Aluminium Profiltechnik Bonn GmbH, 53117 Bonn (DE)
(72) Erfinder: Vogt, Rolf, Dipl.-Ing., 53123 Bonn (DE)
(74) Vertreter: Müller-Wolff, Thomas, Dipl.-Ing.

(56) Entgegenhaltungen:
- EP-A- 0 179 198
- GB-A- 797 450
- GB-A- 1 388 959
- GB-A- 2 277 943
- US-A- 4 497 148

## Beschreibung

Die Erfindung betrifft eine Klemmverbindung, bestehend aus mindestens zwei in einer Fügezone zu verbindenden Einzelprofilen oder Baugruppen und mindestens zwei Fügeteilen, die mit einem Befestigungsmittel, wie Schrauben oder dergleichen in der die Fügezone bildenden Ebene, senkrecht zur Ebene der Einzelprofile verspannt werden, wobei jedes Fügeteil im Querschnitt gesehen eine Pilzform aufweist, und die Fügeteile flächensymmetrisch zur Fügezone angeordnet und durch ein in dieser Fläche wirkendes Befestigungsmittel verspannt sind, und der Pilzhut an der Außenseite bündig mit der Außenfläche der Einzelprofile abschließt, und am Pilzfuß Seitenflächen als Anschlagflächen für die Stirnflächen der Einzelprofile ausgebildet sind.

Aus der GB 2 277 943 A ist eine Klemmverbindung der eingangs genannten Art bekannt. Diese Klemmverbindung soll eine flexible Befestigung von Brandschutzwänden ermöglichen, die aus mit Stahlblech-beplankten Isoliermatten bestehen. Im Falle einer Explosion verbiegen sich die Wandelemente, wobei das flexible Verbindungsstück als Führung für die Seitenflächen der schwalbenschwanzartig ausgebildeten Stahlbleche wirkt. Durch die sich an den Seitenflächen der Schwalbenschwanzführung verformenden Stahlbleche wird Energie absorbiert.

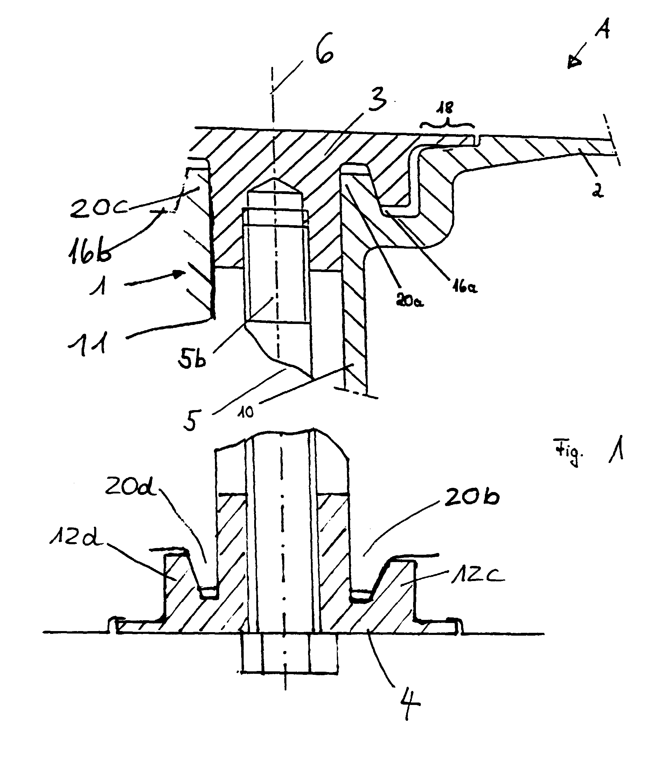

In der GB 797 450 A wird ein Verbindungselement für doppelwandige Isolierelemente beschrieben, wobei an den Stirnseiten zwischen den Doppelwänden U-förmige Eckprofile angeordnet sind. An den Schenkeln der U-Profile erfolgt entweder von außen oder von innen eine Verspannung durch ein aus zwei Fügeteilen bestehendes Klemmelement. Für die Montage von glatt abschließenden Isolierelementen müssen die Fügeteile seitlich in das Innere der U-förmigen Profile eingeschoben und durch eine in der Fügezone angeordnete Spannschraube verspannt werden. Dieses bedeutet, daß die zu verbindenden Isolierelemente von der Seite her (in Figur 1 die Bildebene) frei zugänglich sein müssen oder daß die Fügeteile bereits vormontiert sind, damit eine Verspannung zwischen den U-Schenkeln erfolgen kann.

Ausgehend von diesem Stand der Technik liegt der vorliegenden Erfindung die Aufgabe zugrunde, eine lösbare und an der Außenseite glatte Klemmverbindung für längslaufende Strukturprofile zu schaffen, die als tragende Elemente in Wand-, Dach- oder Bodengruppen von Fahrzeugaufbauten verwendet werden können und die seitliche Zug- und Druckkräfte ohne Deformation bzw. Lockerung der Verbindung aufnehmen. Derartige aus Strukturprofilen zusammengesetzte Aufbauten werden, z.B. bei Tunneldurchfahrten, statisch und dynamisch hochbelastet.

Diese Aufgabe wird durch die im kennzeichnenden Teil von Patentanspruch 1 angegebenen Merkmale gelöst. Weitere Ausgestaltungen des Erfindungsgedankens sind den Unteransprüchen zu entnehmen.

Für die neue Klemmverbindung werden nur zwei Fügeteile benötigt, die als im wesentlichen identische Spannschienen ausgebildet sind und die in Verbindung mit mehreren im Abstand voneinander angeordneten Spannschrauben in Längsrichtung der durchlaufenden Einzelprofile verbunden sind, wobei nur die zwei Fügeteile (Spannschienen) für die Erzeugung von Durchgangsbohrungen, Sackbohrungen und Gewinde bearbeitet sind. Dies ist fertigungsfreundlicher und weniger toleranzanfällig als die spanende Bearbeitung an den eventuell sehr großen Baugruppen.

Es können großflächige Einzelprofile dauerhaft und verzugsfrei verbunden werden, da beim Anziehen der Klemmverbindung symmetrische Belastungen auf die Einzelprofile ausgeübt werden.

Erfindungsgemäß sind die Stirnseiten 10, 11 jedes der Einzelprofile 1, 2 in der Verbindungszone als glatte Strangpreßprofilabschnitte ausgebildet und mit zwei auf Schulterflächen 16a, b angeordneten und für die Verhakung ausgebildeten Kopfteilen 20ad versehen. Die Schulterflächen 16a, b sind abgeschrägt und verjüngen sich konusförmig zum Kopfende der Schulterflächen hin. Der Konuswinkel zwischen der Fügezone 6 und der schrägen Schulterfläche ist unter folgenden Gesichtspunkten zu bestimmen:
a) Für eine hohe Kraftübertragung empfiehlt es sich, einen steilen Winkel zu wählen, damit die Pressung in der Konuswand eine hohe Kraftübertragung ermöglicht.
b) Um den Versatz zwischen den Fügeteilen und den Einzelprofilen an der Außenseite der Klemmverbindung so gering wie möglich zu halten, empfiehlt es sich, einen flachen Konuswinkel zu wählen. Als übliches Toleranzspiel zwischen den Oberflächen des Fügeteils und der Oberfläche des Einzelprofiles ist ein Toleranzbereich von ± 0,2 mm vorgesehen. Dieses Toleranzspiel kann nun noch weiter verringert werden, wenn auf der Oberfläche des Fügeteils eine elastische Nase 18 angeordnet ist. Für bestimmte Anwendungsfälle ist es vorteilhaft, wenn ein Dichtungsprofil 19 zwischen Fügeteil 3 und Einzelprofil 1 eingeschoben wird.

Gemäß einer Variante der vorliegenden Erfindung ist vorgesehen, daß nur das außenliegende Fügeteil 3 als durchlaufende Spannschiene ausgebildet ist, während das innenliegende Fügeteil lediglich abschnittsweise auf der Gesamtlänge des Wandprofiles vorhanden ist. Dadurch kann der Materialeinsatz und damit das Gewicht der Klemmverbindung verringert werden, ohne daß bei der Verwendung von Innenverkleidungen ein optischer Nachteil auftritt.

Grundsätzlich ist die erfindungsgemäße Klemmverbindung druckdicht ausgebildet, weil durch die zumindest von der Außenseite her wirkende, durchgehende Preßfassung des Fügeteils 3 eine geschlossene Abdichtung an der Verbindung zwischen der Innen- und Außenseite der Wandprofile gegeben ist. Um jedoch bei korrossiver Umgebung jeglicher Art von Korrossionsangriff zu unterbinden, kann zusätzlich in den außenliegenden Spalten 14a, b eine Abdichtung entweder elastisch oder als starres Dichtungsprofil vorgesehen werden.

Durch die Verwendung von horizontal angeordneten, frei zugänglichen Schraubverbindungen ist die vorliegende Klemmverbindung fertigungsfreundlich und wird beispielsweise mittels einer einfachen Abstandsvorrichtung in einem Arbeitsgang durch Einschieben der Fügeteile zwischen dem oberen und unteren Wandprofil hergestellt. Bei der Verwendung von innenseitig einschraubbaren Spannschrauben ist die erfindungsgemäße Klemmverbindung auch wieder lösbar, ohne daß irgendwelche Beschädigungen an den Oberflächen der zu verbindenden Einzelprofilteile auftreten.

Zur Sicherung der Klemmverbindung können zusätzlich Federringe, Umlegscheiben oder andere bekannte Maßnahmen, wie z. B. eine Verklebung, angewendet werden. Es ist jedoch bevorzugt an den Einsatz von hochfesten Spannschrauben gedacht, bei denen die erforderliche Vorspannung aufgrund der Federkennlinie bestimmt wird.

Wie bereits einleitend gesagt, ist daran gedacht, die Einzelprofile als Strangpreßprofile aus Aluminium oder einer Aluminiumlegierung herzustellen, so daß eine Nachbearbeitung dieser Teile nicht erforderlich ist. Die Fügeteile sollen vorzugsweise aus Stahl bestehen und sind daher leicht spanend zu bearbeiten. Sie müssen an der Konusfläche passend zu den Einzelprofilen ausgebildet sein, wobei auf das Toleranzspiel von ± 0,2 mm zwischen den Außenflächen der Einzelprofile und der Fügeteile zu achten ist.

Im folgenden wird die Erfindung anhand mehrerer Ausführungsbeispiele näher erläutert. Es zeigen:
- Fig. 1: Detailausschnitt eines Fügeteiles mit verlängerter Hutfläche;
- Fig. 2: Detailausschnitt nach Figur 1 mit zusätzlichem Dichtungsprofil.

In Figur 1 ist eine Klemmverbindung als Teilschnitt zwischen dem Einzelprofil 2 und dem Fügeteil 3 dargestellt. Die Längsachse einer Spannschraube 5 verläuft in Richtung der Fügezone 6. Sie weist an der Innenseite der Klemmverbindung einen Schraubenkopf und an der Außenseite ein Gewindeteil 5b auf.

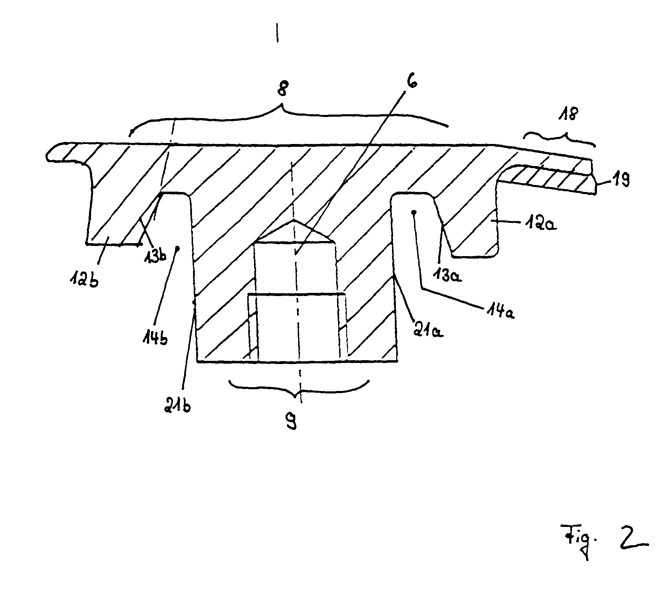

Wie aus Figur 2 erkennbar, hat der Pilzhut 8 an der Unterseite zwei wie eine Hutkrempe nach unten in Richtung Pilzfuß 9 sich erstreckende Stege 12a, b. Die Innenflächen 13a, b der Stege 12a, b sind abgeschrägt und bilden einen sich konusförmig erweiternden Stegraum 14a, b. Die Innenflächen 13a, b korrespondieren mit je einer Schulterfläche 16a, die an der Unterseite des Kopfteiles der Einzelprofile angeordnet ist (Figur 1).

Ferner ist in Figur 1 eine elastische Überlappung in Form eines Pilzhutrandes 18 an der Außenseite der Klemmverbindung zwischen der Fügeteiloberfläche und dem Einzelprofil dargestellt, wodurch sich der Spalt zwischen Einzelprofil und Fügeteil verringert und gleichzeitig eine im wesentlichen plane Oberfläche erzeugt werden kann.

In Figur 2 ist zur Verbesserung der Dichtigkeit zwischen Fügeteil und Einzelprofil eine elastische Dichtung 19 unterhalb des Pilzhutrandes 18 angeordnet. Beim Einbau des Fügeteils und beim Aufbringen der Spannkraft über die Spannschraube 5 wird der Pilzhutrand 18 elastisch verformt und dabei eine absolut dichte und nahezu ebene Fläche zwischen dem Einzelprofil und dem Fügeteil gebildet.

## Patentansprüche

1. Klemmverbindung, bestehend aus mindestens zwei in einer Fügezone (6) zu verbindenden Einzelprofilen oder Baugruppen (1, 2) und mindestens zwei Fügeteilen (3, 4), die mit einem Befestigungsmittel, wie Schrauben oder dergleichen in der die Fügezone bildenden Ebene, senkrecht zur Ebene der Einzelprofile verspannt werden, wobei jedes Fügeteil (3, 4) im Querschnitt gesehen eine Pilzform aufweist, und die Fügeteile (3, 4) flächensymmetrisch zur Fügezone (6) angeordnet und durch ein in dieser Fläche wirkendes Befestigungsmittel verspannt sind, und der Pilzhut (8) an der Außenseite (A) bündig mit der Außenfläche der Einzelprofile (1, 2) abschließt, und am Pilzfuß (9) Seitenflächen (21a, b) als Anschlagflächen für die Stirnflächen (10, 11) der Einzelprofile (1, 2) ausgebildet sind,
dadurch gekennzeichnet,
daß an der Pilzhutunterseite Stege (12a, b) nach Art einer Hutkrempe herausragen, und
zwischen den Stegen und den Anschlagflächen am Pilzfuß zwei konusförmig zum unteren Ende des Pilzfußes hin sich erweiternde Stegräume (14a, b) ausgebildet sind,
daß jedes Einzelprofil (1, 2) an seiner zur Fügezone (6) hin gewandten Stirnseite (10, 11) je ein über eine Schulterfläche (16a, b) hinausragendes Kopfteil (20a, b) aufweist, das in den Stegraum (14a, b) eingreift und
die Kopfteile (20a, b; 20c, d) über die Schulterflächen (16a, b) mit den jeweiligen Stegen (12a, b; 12c, d) verhakt sind und
daß die Oberseite des Pilzhutes mit einer über die zwischen Fügeteil (3) und Einzelprofil bestehenden Spaltöffnung hinausragenden Nase versehen ist.

2. Klemmverbindung nach Anspruch 1,
dadurch gekennzeichnet,
daß in die Spaltöffnung zwischen den Fügeteilen und den Einzelprofilen elastische Dichtungen eindrückbar sind.

3. Klemmverbindung nach einem der vorhergehenden Ansprüche,
dadurch gekennzeichnet,
daß die Einzelprofile als Strangpreßprofile aus Aluminium oder einer Aluminiumlegierung bestehen.

4. Klemmverbindung nach einem der vorhergehenden Ansprüche,
dadurch gekennzeichnet,
daß die Fügeteile aus Stahl, vorzugsweise einer Chrom-Nikkel-Stahl-Legierung bestehen.

5. Klemmverbindung nach einem der Ansprüche 1 bis 4,
dadurch gekennzeichnet,
daß die Fügeteile und/oder Einzelprofile aus Kunststoff bestehen.

## Claims

1. A clamping connection consisting of at least two individual profiles or assemblies (1, 2) to be connected in a joining zone (6) and at least two joining parts (3, 4) which, by means of fixing means such as bolts or the like, are tensioned in the plane forming the joining plane, such tensioning taking place perpendicularly relative to the plane of the individual profiles, wherein each joining part (3, 4), if viewed in a cross-section, has the shape of a mushroom, wherein the joining parts (3, 4) are arranged surface-symmetrically relative to the joining zone (6), wherein the mushroom hat (8), on the outside (A), is flush with the outer face of the individual profiles (1, 2) and wherein the mushroom base (9) is provided with side faces (21a, b) in the form of stop faces for the end faces (10, 11) of the individual profiles (1, 2),
characterised in
that webs (12a, b) project from the mushroom hat underside like a hat brim,
that between the webs and the stop faces at the mushroom base, there are provided two web spaces (14a, b) which widen conically towards the lower end of the mushroom base,
that each individual profile (1, 2), at its end face (10, 11) facing the joining zone (6), comprises a head part (20, b) which projects beyond a shoulder face (16a, b) and which engages the web space (14a, b),
that, across the shoulder faces (16a, b), the head parts (20a, b; 20c, d) and the respective webs (12a, b; 12c, d) are hooked together, and
that the upper side of the mushroom hat is provided with a nose which projects beyond the gap opening existing between the joining part (3) and the individual profile.

2. A clamping connection according to claim 1,
characterised in
that resilient seals can be pressed into the gap opening between the joining parts and the individual profiles.

3. A clamping connection according to any one of the preceding claims,
characterised in
that the individual profiles in the form of extruded profiles consist of aluminium or an aluminium alloy.

4. A clamping connection according to any one of the preceding claims,
characterised in
that the joining parts consist of steel, preferably a chromium nickel steel alloy.

5. A clamping connection according to any one of claims 1 to 4,
characterised in
that the joining parts and/or the individual profiles consist of plastics.

## Revendications

1. Dispositif de raccordement à serrage, comprenant au moins deux profilés individuels, ou groupes structurels (1, 2) à relier dans une zone de jonction (6), et au moins deux pièces de jonction (3, 4), lesquelles sont serrées avec un moyen de fixation, tel que des vis ou similaires, dans le plan qui forme la zone de jonction et perpendiculairement au plan des profilés individuels, dans lequel chaque pièce de jonction (3, 4) présente en section transversale une forme en champignon, et les pièces de jonction (3, 4) sont agencées de manière symétrique quant à leur surface vis-à-vis de la zone de jonction (6), et sont serrées par un moyen de fixation agissant dans cette surface, et le sommet (8) de la forme en champignon au niveau du côté extérieur (A) se termine en affleurement avec la surface extérieure des profilés individuels (1, 2) et, au niveau du pied (9) de la forme en champignon, sont réalisées des surfaces latérales (21a, 21b) à titre de surfaces de butée pour les surfaces frontales (10, 11) des profilés individuels (1, 2),
caractérisé en ce que :
- au niveau de la face inférieure de la forme en champignon dépassent des barrettes (12a, 12b), à la manière d'un rebord de chapeau, et entre les barrettes et les surfaces de butée au niveau du pied de la forme en champignon sont ménagés deux intervalles entre barrettes (14a, 14b), qui s'élargissent en forme de cône vers l'extrémité inférieure du pied,
- chaque profilé individuel (1, 2) présente, au niveau de sa face frontale (10, 11) tournée vers la zone de jonction (6), une partie de tête respective (20a, 20b) qui dépasse au-delà d'une surface formant épaulement (16a, 16b), ladite partie de tête s'engageant dans l'intervalle (14a, 14b), et les parties de tête (20a, 20b ; 20c, 20d) sont accrochées avec les barrettes respectives (12a, 12b ; 12c, 12d) par l'intermédiaire des surfaces d'épaulement (16a, 16b), et
- la face supérieure du chapeau de la forme en champignon est pourvue d'un ergot qui dépasse au-delà de l'ouverture en forme de fente existant entre la pièce de jonction (3) et le profilé individuel.

2. Dispositif de raccordement à serrage selon la revendication 1, caractérisé en ce que des joints élastiques sont susceptibles d'être enfoncés dans l'ouverture en forme de fente entre les pièces de jonction et les profilés individuels.

3. Dispositif de raccordement à serrage selon l'une des revendications précédentes, caractérisé en ce que les profilés individuels sont réalisés sous forme de profilés extrudés en aluminium, ou en alliage d'aluminium.

4. Dispositif de raccordement à serrage selon l'une des revendications précédentes, caractérisé en ce que les pièces de jonction sont réalisées en acier, de préférence en alliage d'acier au chrome-nickel.

5. Dispositif de raccordement à serrage selon l'une des revendications 1 à 4, caractérisé en ce que les pièces de jonction et/ou les profilés individuels sont en matière plastique.
